# EUROPEAN PATENT APPLICATION

(11) **EP 4 844 668 A1**
(43) Date of publication of application: **25.11.2026**
(21) Application number: 25749161.3
(22) Date of filing: 06.01.2025
(51) Int. Cl.: G06Q 50/50, H04L 51/02, H04L 51/04, H04L 51/21, G06F 3/04842, G06N 3/08

(54) **ELECTRONIC DEVICE AND CONVERSATION MESSAGE RECOMMENDATION METHOD USING ARTIFICIAL INTELLIGENCE MODEL IN ELECTRONIC DEVICE**

(30) Priority: 30.01.2024 KR 20240014375; 21.02.2024 KR 20240025247
(71) Applicant: Samsung Electronics Co., Ltd., Suwon-si, Gyeonggi-do 16677 (KR)
(72) Inventor: KO, Sungmin, Suwon-si, Gyeonggi-do 16677 (KR); LEE, Junghun, Suwon-si, Gyeonggi-do 16677 (KR); KIM, Wooseok, Suwon-si, Gyeonggi-do 16677 (KR); KIM, Hyunil, Suwon-si, Gyeonggi-do 16677 (KR); KWAK, Taewon, Suwon-si, Gyeonggi-do 16677 (KR); HAN, Yonggil, Suwon-si, Gyeonggi-do 16677 (KR)
(74) Representative: Gulde & Partner
(86) International application number: PCT/KR2025/000190
(87) International publication number: WO 2025/164978

(57) **Abstract**

An electronic device according to an embodiment of the present invention comprises: a communication circuit; a display; a memory for storing instructions; and a processor operatively connected to the communication circuit, the display, and the memory. The instructions, when executed by the processor, may be set to cause the electronic device to: search for a previous conversation message with a counterpart in a state of a message recommendation function being activated while a screen of conversation with the counterpart is displayed on the display; generate an answer request prompt by using at least one previous conversation message when the at least one previous conversation message with the counterpart exists within a designated period, and acquire answer messages corresponding to the answer request prompt via an AI model; display the answer messages on the screen of conversation; and generate a greeting request prompt when the at least one previous conversation message with the counterpart does not exist within the designated period, acquire greeting message corresponding to the greeting request prompt via the AI model, and display the greeting messages on the screen of conversation.

## Description

### [Technical Field]

Various embodiments of the disclosure relate to an electronic device and a method of recommending a conversation message using an artificial intelligence model by the electronic device.

### [Background Art]

With the development of information communication technologies, semiconductor technologies, and the like, the supply and use of various electronic devices are rapidly increasing. Electronic devices are being developed to perform communication so that users can communicate while carrying them. An electronic device may mean a device that performs a specific function according to an installed program, such as a mobile communication terminal, a tablet PC, a smartphone, a wearable electronic device, a video/sound device, a desktop/laptop computer, or a vehicle navigation device.

The electronic device may provide an interactive messaging service (or application) through which a user may exchange messages with a counterpart. The electronic device may enable a user to select a conversation counterpart who wants to chat and exchange conversation messages with the counterpart through a message application. For example, the electronic device may display a message received from the conversation counterpart on a conversation screen using the message application, and transmit a conversation message input by the user to the counterpart.

### [Detailed Description of the Invention]

### [Technical Problem]

The electronic device may recommend a predetermined response message before the user inputs a response message through a message application, or recommend a response phrase for one received message, such as a "Smart Recommend". For example, when receiving a message such as "Hello" through a message application, the electronic device may recommend a response phrase such as a predetermined recommended response "Hello" or "Yes, hello" corresponding to the message "Hello".

A recommended response message recommended through the message application in the electronic device may be a response message recommended for one received message, and may provide only a sentence in a simple form, without providing a sentence reflecting the context, topic, tone, various environmental variables (e.g., time, date, or location), or emoji of previous conversation content.

According to an embodiment of the disclosure, there may be provided an electronic device for acquiring and recommending a conversation message, which reflects a context, topic, or tone of a previous conversation with a counterpart and various environmental variables through an artificial intelligence (AI) model when receiving and transmitting a conversation message from and to the counterpart through a message application and a method of recommending a conversation message by the electronic device using the artificial AI model.

An electronic device according to an embodiment of the disclosure may include communication circuitry, a display, memory storing instructions, and a processor operatively connected to the communication circuitry, the display and the memory. The instructions may be configured to cause, when executed by the processor, the electronic device to search for previous conversation message with a counterpart in a state in which a message recommendation function is activated while a conversation screen with the counterpart is displayed on the display. The instructions may be configured to cause, when executed by the processor, the electronic device to, when there is at least one previous conversation message with the counterpart within a specified period, transfer a response request prompt to an AI model by generating the response request prompt using the at least one previous conversation message. The instructions may be configured to cause, when executed by the processor, the electronic device to obtain, through the AI model, response messages corresponding to the response request prompt and display the response messages on the conversation screen. The instructions may be configured to cause, when executed by the processor, the electronic device to, when the at least one previous conversation message with the counterpart does not exist within the specified period, transfer a greeting request prompt to the AI model by generating the greeting request prompt. The instructions may be configured to cause, when executed by the processor, the electronic device to obtain, through the AI model, greeting messages corresponding to the greeting request prompt and display the greeting messages on the conversation screen.

A method of recommending a conversation message using an AI model by an electronic device according to an embodiment of the disclosure may include searching for a previous conversation message with a counterpart in a state in which a message recommendation function is activated while a conversation screen with the counterpart is displayed on a display of the electronic device. The method may include, when there is at least one previous conversation message with the counterpart within a specified period, transferring a response request prompt to an AI model by generating the response request prompt using the at least one previous conversation message. The method may include obtaining, through the AI model, response messages corresponding to the response request prompt, and displaying the response messages on the conversation screen. When at least one previous conversation message with the counterpart does not exist within the specified period, transferring a greeting request prompt to the AI model by generating the greeting request prompt. The method may include obtaining, through the AI model, greeting messages corresponding to the greeting request prompt, and displaying the greeting messages on the conversation screen.

According to an embodiment of the disclosure, in a non-transitory storage medium storing instructions configured to, when executed by an electronic device, cause the electronic device to perform at least one operation, the at least one operation may include searching for a previous conversation message with a counterpart in a state in which a message recommendation function is activated while a conversation screen with the counterpart is displayed on a display of the electronic device, when there is at least one previous conversation message with the counterpart within a specified period, transferring a response request prompt to an AI model by generating the response request prompt using the at least one previous conversation message, obtaining, through the AI model, response messages corresponding to the response request prompt, and displaying the response messages on the conversation screen, when there is no previous conversation message with the counterpart within the specified period, transferring a greeting request prompt to the AI model by generating the greeting request prompt, and obtaining, through the AI model, greeting messages corresponding to the greeting request prompt, and displaying the greeting messages on the conversation screen.

### [Brief Description of Drawings]

FIG. 1 is a block diagram of an electronic device within a network environment according to an embodiment.
FIG. 2 is a schematic block diagram of an electronic device according to an embodiment.
FIG. 3 is a diagram illustrating an example of conversation message recommendation function configuration screen using an AI model according to an embodiment.
FIG. 4 is a diagram illustrating a conversation screen with a counterpart according to an embodiment.
FIG. 5 is a flowchart illustrating a conversation message recommendation operation using an AI model by an electronic device according to an embodiment.
FIG. 6A is a flowchart illustrating a conversation message recommendation operation using an on-device-based AI model or a cloud-based AI model by an electronic device according to an embodiment.
FIG. 6B is a flowchart continuing from FIG. 6A.
FIG. 7 is a diagram illustrating a response message request prompt generation operation according to an embodiment.
FIG. 8 is a diagram illustrating an example of a conversation message recommendation screen using an AI model according to an embodiment.
FIG. 9 is a diagram illustrating an example of a conversation message recommendation screen using an AI model when a knowledge-based question is received according to an embodiment.
FIG. 10 is a diagram illustrating an example of a conversation message recommendation screen using an AI model when a response request prompt that does not include an author of each of previous dialogue messages is used and when a response request prompt that includes the author of each of the previous dialogue messages is used, according to an embodiment.
FIG. 11 is a diagram illustrating an example of a conversation message recommendation screen when an input of a response request prompt includes a sentence including an inappropriate expression, according to an embodiment.
FIG. 12A is a diagram illustrating an example of a screen for displaying a conversation message recommendation area instead of a keypad for inputting a conversation message input according to activation of a conversation message recommendation function using an AI model while a conversation screen is displayed according to an embodiment.
FIG. 12B is a diagram illustrating an example of a screen for displaying recommended response messages in a conversation message recommendation area and transmitting a selected response message to a counterpart in the state in which a conversation message recommendation function using an AI model is activated, according to an embodiment.
FIG. 13 is a diagram illustrating a generative artificial intelligence system according to an embodiment.

### [Mode for Carrying out the Invention]

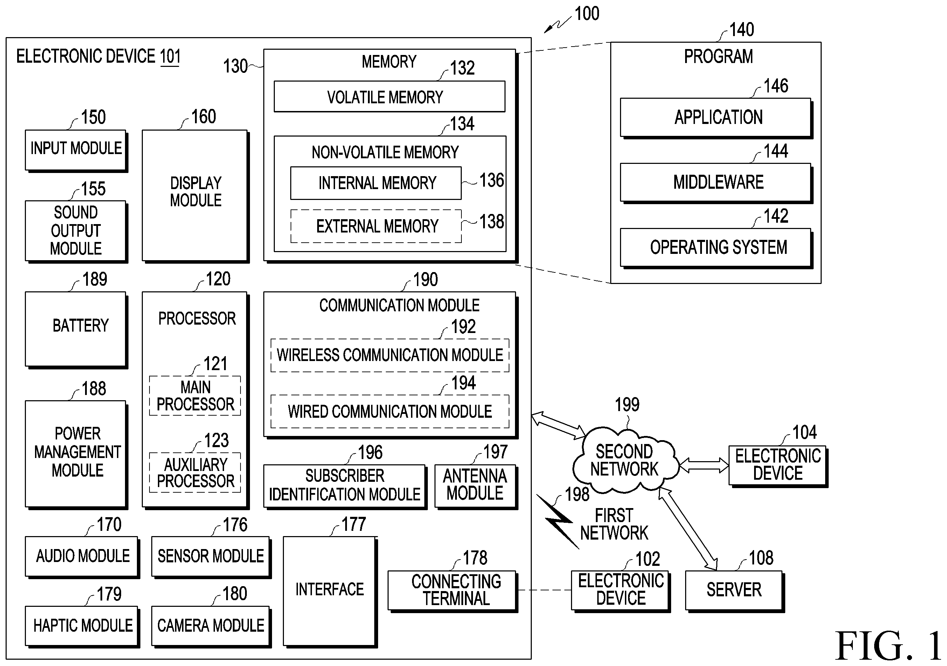

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following description, configurations that can be understood through the preceding embodiments may be provided with the same reference numerals in the drawings or provided with no reference numerals, and detailed descriptions thereof may also be omitted. The electronic device according to an embodiment set forth herein may be implemented by selectively combining the configurations of different embodiments, and the configuration of an embodiment may be replaced with the configurations of another embodiment. For example, it is noted that the disclosure is not limited to a specific drawing or embodiment.

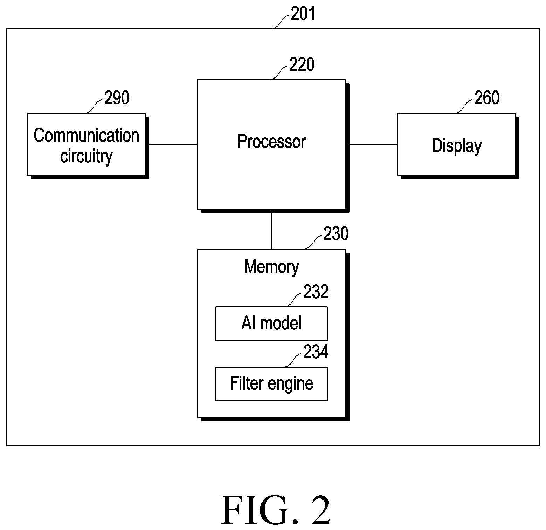

FIG. 2 is a block diagram of the electronic device according to an embodiment.

Referring to FIG. 2, an electronic device 201 (e.g., the electronic device 101 of FIG. 1) according to an embodiment may include a processor 220, memory 230, a display 260, and communication circuitry 290. The electronic device 201 according to an embodiment is not limited thereto and may further include various components or may be configured to exclude some of the components. The electronic device 201 according to an embodiment may further include all or some of the components of the electronic device 101 illustrated in FIG. 1.

The processor 220 (e.g., the processor 120 of FIG. 1) according to an embodiment may include a central processing unit (CPU) or an application processor (AP), and may include hardware structures (e.g., an AI chip) specialized in processing artificial intelligence (AI) models. The processor 220 according to an embodiment may perform the overall control operations of the electronic device 201 and may perform operations for recommending (or proposing) a conversation message using an AI model.

The processor 220 according to an embodiment may display a conversation screen for exchanging a conversation message with a counterpart on the display 260, based on execution of a message application (e.g., an interactive message application). For example, the message application may be a chatting application, an instant message application, a short message service (SMS) message application, or an application capable of exchanging messages in a manner of having a conversion with a counterpart.

According to an embodiment, the processor 220 may identify whether a conversation message recommendation function is activated while displaying the conversation screen with the counterpart on the display 260. The counterpart according to an embodiment may refer to another user who exchanges conversation messages with the user of the electronic device 201, and the user and the counterpart may use unique user IDs, phone numbers, or user accounts, respectively. The conversation message recommendation function according to an embodiment may be a message recommendation function using an AI model. When the conversation message recommendation function is not activated while the conversation screen with the counterpart is displayed, the processor 220 according to an embodiment may not recommend a conversation message with the counterpart.

When the conversation message recommendation function is activated while the conversion screen with the counterpart is displayed, the processor 220 according to an embodiment may identify a previous conversation message with the counterpart.

The processor 220 according to an embodiment may determine (identify or check) whether there is the previous conversation message with the counterpart within a predetermined period, based on the result of identifying the previous conversation message with the counterpart. For example, the predetermined period may be 24 hours or several days, but may be specified as a shorter or longer period.

When there is the previous conversation message with the counterpart within the predetermined period, the processor 220 according to an embodiment may generate a response request prompt by using the previous conversation message with the counterpart.

The response request prompt according to an embodiment may include natural language or a function (or instruction) to be input to an AI model to recommend a response message reflecting a context, a topic, a tone, various variables (e.g., a language, a time, a date, or a place), or an emoji in the content of the previous conversation message with the counterpart.

For example, the response request prompt may be configured as shown in Table 1 below.

**[Table 1]**

| |
|---|
| Response request prompt |
| **Instruction:**The input text below is a group conversation in {source_language} between "Others" and the "User". Using the entire conversation as your context and paying special attention to the last messages, generate four meaningful replies that build on or continue the discussion from the "User" perspective. Please follow these considerations:- Consideration of Conversation Context, Tone, and Emotional State: Pay special attention to the overall context, tone, and emotional state of both the "User" and "Others" participants. |
| - Factual Accuracy: Replies should be consistent with prior messages and should accurately reflect the facts presented in the conversation. |
| - Addressing Unanswered Questions and Comments: Ensure that any questions or comments that "User" may have missed are addressed. |
| - Promotion of Diversity: Generate replies that encompass diverse intents, contexts, or tones. Include one reply that addresses the most recent messages and another that focuses on unanswered questions or comments. |
| - Emphasis on Accuracy: While analyzing the conversation, make a note of any facts and numbers mentioned in messages to enhance the accuracy of your replies. |
| - Maintaining Tone, Intent, and Context: Uphold the tone, intent, and context of the original conversation. |
| - Descriptive Replies: When necessary to address multiple unreplied or unanswered questions or comments, consider providing more detailed and comprehensive responses. |
| - The output must be in {source_language}. |
| - You must always include the appropriate emojis to each response message. |
| - The response message must not exceed 160 characters, including spaces. |
| **Response format:** |
| { |
| "response": [ |
| "User: Hello, there. 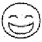 ", |
| "User: Hay, How are you today? 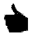 , |
| "User: Good morning. 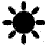 ", |
| "User: How are you doing? 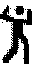 " |
| ] |
| } |
| input: |
| "Others: Which season do you like the most out of all four seasons? |
| User: I like winter the most out of all four seasons! |
| Others: Isn't winter too cold?" |
| output: |

Referring to Table 1 above, the processor 220 according to an embodiment may generate a response request prompt including an instruction, a response format, and an input. For example, the processor 220 may include, as an instruction, the content such as [the following input text is {source_language} group conversation between "other person" and "user". Use the entire conversation as context and pay particular attention to the last message to generate four meaningful responses, based on or lasting the discussion from a "user" perspective. Follow these considerations.
- Consider the context of the conversation, tone, and emotional state: pay special attention to the overall context, tone, and emotional state of the "user" and "other person".
- Facts Accuracy: responses must be consistent with previous messages and accurately reflect the facts presented in the conversation.
- Handle answered questions and comments: ensure that any questions or comments that "user" may have missed are resolved.
- Increase diversity: generate responses that cover various intentions, contexts, and tones. Include one response to your most recent message and one response that focuses on an unanswered question or opinion.
- Emphasize accuracy: while the conversation is analyzed, record the facts and figures mentioned in the message to increase the accuracy of responses.
- Keep the tone, intention, and context: keep the tone, intention, and context of the original conversation.
- Description response: consider providing a more detailed and comprehensive response if there is no response or it is needed to solve multiple questions or opinions that are unanswered.
- Output must be {source_language}
- Each response message should always contain an appropriate emoticon.
- Response messages cannot exceed 160 characters, including spaces.], and {source _language} may include a recognized language by recognizing the language (or the language of previous conversation messages with the counterpart) to be included in the input using a language recognition model or a language configured in the electronic device 201.

For example, the processor 220 may include the content indicating a response format of the response message, such as ["User: Hello, there. 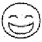 ", "User: Hay, How are you today? 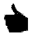 ", "User: Good morning. 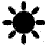 ", "User: How are you doing? 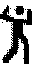 "].

For example, when the content of the previous conversation message with the counterpart includes, as the input, [Which season do you like the most out of all four seasons?, I like winter the most out of all four seasons!, "Isn't winter too cold?], the processor 220 may include the content such as "Others: Which season do you like the most out of all four seasons? User: I like winter the most out of all four seasons! Others: Isn't winter too cold?" in which information (e.g., user or others) indicating the author of each message is included as a prefix of each message in each message included in the content of the previous conversation message.

The response request prompt in [Table 1] is just an example, and it is obvious that the processor 220 may generate a different response request prompt having an instruction, response format, and/or input different from [Table 1] according to the content of the previous conversation message with the counterpart.

The processor 220 according to an embodiment may transfer the generated response request prompt to the AI model.

The processor 220 according to an embodiment may obtain a response message corresponding to the generated response request prompt through the AI model. The processor 220 according to an embodiment may obtain a response message corresponding to the response request prompt through an on-device-based AI model 232 (hereinafter, also referred to as the AI model 232) inside the electronic device 201 or a cloud-based AI model (not shown) (e.g., an AI model (not shown) included in the server 108) (hereinafter, also referred to as a cloud AI model) outside the electronic device 201.

The processor 220 according to an embodiment may determine (identify or judge) whether to use the AI model 232 or use the cloud AI model for the response request prompt (and/or a greeting request prompt). The processor 220 according to an embodiment may determine (identify or judge) whether to transfer the response request prompt (and/or a greeting request prompt) to the AI model 232 or to the cloud AI model. The processor 220 according to an embodiment may determine whether to use (or transfer) the AI model 232 or the cloud AI model for the response request prompt (and/or the greeting request prompt), based on configuration information, a prompt type, a prompt size, a communication state with a cloud server, and/or a load state of the electronic device 201.

When the configuration information is configured to use the AI model 232 in the state where the configuration information indicating whether to use the AI model 232 or the cloud AI model, the processor 220 according to an embodiment may transfer the response request prompt to the AI model 232. When the configuration information is configured to use the cloud AI mode, the processor 220 according to an embodiment may transfer the response request prompt to the cloud AI model.

When it is determined whether to use the AI model 232 or the cloud AI model, based on the prompt type, the processor 220 according to an embodiment may transfer the response request prompt to the cloud AI model to increase the prompt processing performance and may transfer the greeting request prompt to the AI model 232 to reduce time consumption by communication.

When it is determined whether to use the AI model 232 or the cloud AI model, based on the prompt size (e.g., data size), the processor 220 may transfer the response request prompt to the AI model if the size of the response request prompt is larger than or equal to a predetermined data size, and may transfer the response request prompt to the AI model 232 when the size of the response request prompt is equal to or smaller than the predetermined data size. For example, the processor 220 may transfer the response request prompt to the cloud AI model when the response request prompt is in Korean and the number of characters is 1000 or more, and may transfer the response request prompt to the AI model 232 when the response request prompt is in Korean and the number of characters is less than 1000. For example, the processor 220 may transfer the response request prompt to the cloud AI model when the response request prompt is in English and the number of characters is 2500 or more, and may transfer the response request prompt to the AI model 232 when the response request prompt is in English and the number of characters is less than 2500.

When it is determined whether to use the AI model 232 or the cloud AI model, based on the communication state with the cloud server, the processor 220 according to an embodiment may transfer the response request prompt to the cloud AI model if the communication state with the cloud server is normal, and may transfer the response request prompt to the AI model 232 if the communication state with the cloud server is not normal, that is, a bad state.

When it is determined whether to use the AI model 232 or the cloud AI model, based on a load level of the electronic device 201, the processor 220 according to an embodiment may transfer the response request prompt to the cloud AI model if the load of the electronic device 201 (or processor 220) is greater than or equal to predetermined load (e.g., if data throughput is greater than or equal to predetermined data throughput), and may transfer the response DYCJD prompt to the AI model 232 if the load of the electronic device 201 (or processor 220) is equal to or less than the predetermined load.

The processor 220 according to an embodiment may obtain one or more response messages corresponding to the response request prompt from the AI model 232 or the cloud AI model.

According to an embodiment, one or more response messages corresponding to the response request prompt may be obtained using both the AI model 232 and the cloud AI model.

For example, transferring (or inputting) the response request prompt corresponding to Table 1 above to the AI model 232 or the cloud AI mode, the processor 220 may obtain response messages as shown in Table 2 below from the AI model 232 or the cloud AI model.

**[Table 2]**

| |
|---|
| Response |
| { 'response': |
| [ |
| "But winter is pretty because it snows. 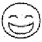 ", |
| "In winter, I can ski or snowboard. 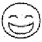 ", |
| "Winter is a good season to eat tangerines, too. 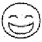 " |
| "It's cold in winter, but it's nice to go sledding. 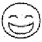 " |
| ] |
| } |

Referring to Table 2 above, in response to the response request prompt corresponding to [Table 1] above, the processor 220 according to an embodiment may obtain response messages including the content such as [But winter is pretty because it snows. 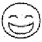 ", "In winter, I can ski or snowboard. 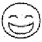 ", "Winter is a good season to eat tangerines, too. 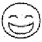 ", "It's cold in winter, but it's nice to go sledding. 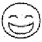 "]. The response messages in [Table 2] above are merely examples, and it is obvious that the processor 220 may obtain at least one response message different according to different response request prompts. The processor 220 according to an embodiment may verify (e.g., identify an inappropriate expression) an input and a response message by using a filter engine 234 (e.g., a safety filter). The filter engine 234 according to an embodiment may include software (or program) for performing an operation of identifying a sentence (or text) including an inappropriate expression (e.g., an expression of a predetermined expression category) in the input and the response message. For example, the predetermined expression categories may include a sexual expression category (Sexual), a derogatory expression category (Derogatory), a toxic expression category (Toxic), a violent expression category (Violent), an insulting expression category (Insult), a profanity expression category (Profanity), a drug-related expression category (Drugs), and/or a category associated with an expression that may cause discomfort to a counterpart. when the input or the response messages do not include the sentence including the sexual expression category (Sexual), the derogatory expression category (Derogatory), the toxic expression category (Toxic), the violent expression category (Violent), the insult expression category (Insult), the profane expression category (Profanity), the drug-related expression category (Drugs), and/or the category associated with the expression that may cause discomfort to the counterpart, the processor 220 according to an embodiment may display the response messages (as they are) on the conversation screen. When the input or the response messages include the sentence including the sexual expression category (Sexual), the derogatory expression category (Derogatory), the toxic expression category (Toxic), the violent expression category (Violent), the insulting expression category (Insult), the profane expression category (Profanity), the drug-related expression category (Drugs), and/or the category associated with the expression that may cause discomfort to the counterpart, the processor 220 according to an embodiment may remove the response messages including the corresponding sentence and display the same without displaying the response messages as they are or display a message indicating that the message cannot be recommended due to inappropriate content included in the input or the response message. When acquiring response messages from the cloud AI model of the external electronic device, the processor 220 according to an embodiment may obtain a response message from which a sentence including expressions of the sexual expression category (Sexual), the derogatory expression category (Derogatory), the toxic expression category (Toxic), and/or the violent expression category (Violent) are primarily removed by the external electronic device, and may secondarily remove a sentence including expressions of the insult expression category (Insult), the profane expression category (Profanity), and/or the drug-related expression category (Drugs) from the obtained response message through the filter engine 234.

When acquiring the response messages from the cloud AI model of the external electronic device, the processor 220 according to an embodiment may also obtain scores related to the sexual expression category (Sexual), the derogatory expression category (Derogatory), the toxic expression category (Toxic), and/or the violent expression category (Violent) for each of the response messages. When the scores related to the sexual expression category (Sexual), the derogatory expression category (Derogatory), the toxic expression category (Toxic), and/or the violent expression category (Violent) of the response message obtained from the cloud AI model of the external electronic device exceed a predetermined score, the processor 220 according to an embodiment may secondarily perform an operation of identifying, through the filter engine 234, a sentence including the expression of the insulting expression category (Insult), the profane expression category (Profanity), and/or the drug-related expression category (Drugs) from the response messages, and calculate the scores related to the insulting expression category (Insult), the profane expression category (Profanity), and/or the drug-related expression category (Drugs) of the response messages. When the scores related to the insulting expression category, profane expression category, and/or drug-related expression category of the secondarily calculated response messages are higher than or equal to a predetermined score (e.g., 1.0), the processor 220 according to an embodiment may not display the response message and may display a message indicating that the response message includes inappropriate content and thus a conversation message cannot be recommended

When there are remaining response messages after removing the response messages including expressions of the sexual expression category (Sexual), the derogatory expression category (Derogatory), the toxic expression category (Toxic), the violent expression category (Violent), the insulting expression category (Insult), the profane expression category (Profanity), the drug-related expression category (Drugs), and/or a category associated with an expression that may cause discomfort to the counterpart, the processor 220 according to an embodiment may perform output format verification, verification of the usefulness of the output content, and/or verification of the validity of the output content for the remaining response messages, and display, on the conversation screen, response messages, for which the output format verification, the verification of the usefulness of the output content, and/or the verification of the validity of the output content have been completed.

According to an embodiment, when the output format of the response messages are constituted by a list of sentences in a format other than the Json format such as "Yes, I enjoyed it", "Not yet, shall we eat?", "I ate", Do you want to eat together?", the processor 220 may perform the output format verification of changing the output format of the response messages to the Json format such as
"User: Yes, I enjoyed it"
"User: Not yet, shall we eat?"
"User: "I ate. Do you want to eat together?"

According to an embodiment, when the response messages include a plurality of similar sentences, the processor 220 may verify the similarity array of the response messages through the similarity verification engine since the usefulness of the response messages may be low, and if there are two sentences having the similarity of a predetermined value (e.g., 0.7 to 0.8) or more, may perform the verification of the usefulness of the output content of removing (or deleting) one of the two sentences.

According to an embodiment, when the response messages include a sentence containing a second language (e.g., Japanese) different from a first language (e.g., Korean) in the state where the input language is the first language, the processor 220 may identify the sentence containing the language different from the input language as an invalid sentence and remove the same to perform the verification of the validity of the output content. For example, based on Unicode, the processor 220 may compare the Unicode (e.g., Korean Unicode /u0370-/u10FF) of the input language with the Unicode of each of the sentences included in the response messages, identify a sentence (e.g., Japanese Unicode 3040-31FF) having a different Unicode, and identify the sentence having the Unicode different from that of the input language as an invalid sentence so perform the verification of the validity of the output content.

The processor 220 according to an embodiment may finally display, as the response messages, the sentences that do not include expressions of a predetermined expression category and have not been removed after the performance of the output format verification, the verification of the usefulness of the output content, and/or the validation of the validity of the output content, among the response messages.

According to an embodiment, when there is no previous conversation message with the counterpart within a predetermined period, the processor 220 may generate a greeting request prompt, transfer the greeting request prompt to the AI model 232 or the cloud AI model, obtain a greeting corresponding to the greeting request prompt through the AI model 232 or the cloud AI model, and display the greeting on the conversation screen.

When there is no previous conversation message with the counterpart within the predetermined period, the greeting request prompt according to an embodiment may include a natural language or a function (or instruction) to be input to the AI model 232 or the cloud AI model to recommend a greeting message to be transferred to the counterpart.

For example, the greeting request prompt may be configured as shown in Table 3 below.

**[Table 3]**

| |
|---|
| Greeting request prompt |
| **Instruction:**Recommend a simple greeting sentence for my friend. However, avoid creating informal sentences. - The output must be in {source_language}. |
| - You must always include the appropriate emojis to each response message. |
| **Response format:** |
| [ |
| "User: Hello. 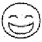 ", |
| "User: Hi there! 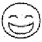 ", |
| "User: Nice to meet you :) 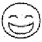 ", |
| "User: Hello, my friend 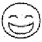 " |
| ] |
| input: |
| output: |

Referring to Table 3 above, the processor 220 according to an embodiment may generate a greeting request prompt including an instruction, a response format, and an input. For example, the processor 200 may include the content such as [Please recommend a simple greeting to my friend. But avoid making routinary languages - The output should be in {source_language].

- Each response message should always include an appropriate emoticon.] in the instruction part, and may include languages configured in the electronic device 201 by using a language recognition model in {source_language}.

For example, the processor 220 may include the content indicating the response format of the greeting message such as ["User: Hello. 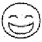 ", "User: Hi there! 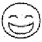 ", "User: Nice to meet you :) 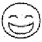 ", "User: Hello, my friend 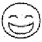 "] in the response format part.

For example, since there is no content of the previous conversation message with the counterpart in the input part, the processor 220 may not include the content.

The greeting request prompt in [Table 3] above is only an example, and it is obvious that the processor 220 may generate a greeting request prompt.

The processor 220 according to an embodiment may obtain greeting messages corresponding to the greeting request prompt through the AI model 232 or the cloud AI model and display the greeting message on the conversation screen. The processor 220 according to an embodiment may obtain greeting messages corresponding to the greeting request prompt by using one of the AI model 232 or the cloud AI model according to pre-stored configuration information in the state where configuration information indicating whether to use the AI model 232 or the cloud AI model is stored.

For example, transferring (or inputting) the response greeting request prompt corresponding to Table 3 above to the AI model 232 or the cloud AI mode, the processor 220 may obtain greeting messages as shown in Table 4 below from the AI model 232 or the cloud AI model.

**[Table 4]**

| |
|---|
| response |
| { 'response': |
| [ |
| "Hello, it's been a while!!", |
| "Good morning~ Have a nice day.", |
| "How about a cup of coffee in the morning?" ] |
| } |

Referring to Table 4 above, in response to the greeting request prompt corresponding to [Table 3] above, the processor 220 according to an embodiment may obtain greeting messages including the content such as ["Hello, it's been a while!!", "Good morning~ Have a nice day.", "How about a cup of coffee in the morning?"] and display the greeting messages on the conversation screen. The greeting message in [Table 4] above is only an example, and it may be apparent to those skilled in the art that the processor 220 may obtain other greeting messages according to other greeting request prompts. According to an embodiment, when the number of greeting messages obtained from the AI model 232 or the cloud AI model (not shown) is less than a predetermined number (e.g., 4 or another predetermined number), the processor 220 may generate an additional greeting message by using a greeting data set (e.g., a first greeting data set by time or date) stored in the memory 230 of the electronic device 201, and display the greeting messages obtained from the AI model 232 or the cloud AI model (not shown) and the greeting message generated by the electronic device 201 itself on the conversation screen. For example, the processor 220 may generate a greeting message by using a plurality of different greeting data sets according to a specific day (e.g., Chuseok or Lunar New Year), weekday or weekend, or morning, afternoon, or evening. [Table 5] below may show examples of the greeting data set according to morning, afternoon, or evening.

**[Table 5]**

| Morning (Korean/English) | Afternoon (Korean/English) | Evening (Korean/English) |
|---|---|---|
| 1. 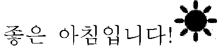 | 1. 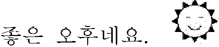 | 1. 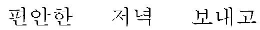 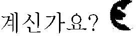 |
| 2. 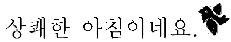 | 2. 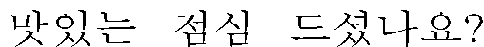 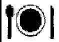 | 2. 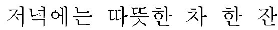 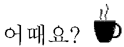 |
| 3. 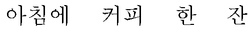 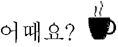 | 3. 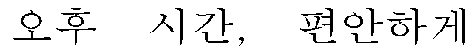 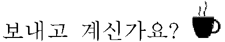 | |
| | | 3. 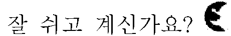 |
| 1. Good morning! 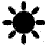 | | 4. 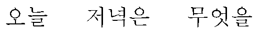 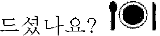 |
| 2.It's a refreshing. 3.morning 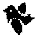 How about a cup of coffee this morning? 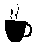 | 1. Have a good afternoon! 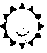 | |
| | 2. Did you have a delicious lunch? 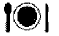 | 1. Are you having a relaxing evening? 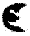 |
| | 3. Are you having a relaxing afternoon? 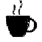 | 2. How about a warm cup of tea in the evening? 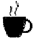 |
| | | 3. Are you resting well? 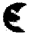 |
| | | 4. What did you have for dinner tonight? 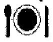 |

Referring to Table 5 above, when the number of greeting messages obtained from the AI model 232 or the cloud AI model (not shown) is less than a predetermined number (e.g., 3), a time at which the greeting request prompt is generated is morning, and a language of the electronic device 201 is Korean, the processor 220 according to an embodiment may obtain the number (e.g., 1) of greetings for filling the predetermined number among the greetings of 1. Good morning! 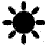 , 2. It's a refreshing morning 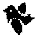 **,** and 3. How about a cup of coffee this morning? 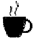 **,** and display three greeting messages obtained from the AI model 232 or the cloud AI model (not shown) and one greeting message generated by the electronic device 201 itself on the conversation screen. The greeting data set in [Table 5] above is only an example, and it is obvious that the processor 220 may obtain a greeting message within the electronic device 201 by using other various greeting data sets. The memory 230 (e.g., the memory 130 of FIG. 1) according to an embodiment may store various data used by at least one component (e.g., the processor 220 and/or the display 260) of the electronic device 201 The data may include, for example, software (e.g., a software module or the program 140) and input or output data for an instruction related thereto. The memory 230 according to an embodiment may store the AI model 232 and the filter engine 234, and may store a program (e.g., software or the program 140 of FIG. 1) for recommending a conversation message by using the AI model 232, as well as various data generated during execution of the program. The memory 230 according to an embodiment may store instructions causing the processor 220 to perform the conversation message recommendation operation (or method) using the AI model according to the disclosure.

The display 260 (e.g., the display 160 of FIG. 1) according to an embodiment may display various pieces of information according to the control of the processor 220. The display 260 according to an embodiment may display a screen (e.g., the conversation screen) associated with a conversation message recommendation operation (or method) using an AI model. According to an embodiment, the display 260 may be implemented in the form of a touch screen. When the display 260 is implemented together with an input module in the form of a touch screen, various piece of information generated according to a user's touch action may be displayed.

The communication circuitry 290 (e.g., the communication module 190 of FIG. 1) according to an embodiment may include a wireless communication module (e.g., a cellular module, a wireless-fidelity (Wi-Fi) module, a Bluetooth module, or a near field communication (NFC) module). The communication module 290 according to an embodiment may communicate with an external electronic device (not shown) (e.g., the server 108 of FIG. 1) including a cloud AI model. The communication circuitry 290 according to an embodiment may transmit a response request prompt or a greeting request prompt to the external electronic device, based on the control of the processor 220. The communication circuitry 290 according to an embodiment may receive a response message or a greeting message corresponding to the response request prompt or the greeting request prompt from the external electronic device, based on the control of the processor 220.

According to an embodiment, the electronic device 201 is not limited to the configuration included in FIG. 2 and may be configured to further include various components. According to an embodiment, the electronic device 201 may further include an input module (not shown) (e.g., the input module 150 of FIG. 1), and may receive various inputs associated with the performance of the conversation message recommendation operation (or method) using the AI model through the input module.

In an embodiment, the main components of the electronic device have been described through the electronic device 201 of FIG. 2. However, in various embodiments, not all of the components shown in FIG. 2 are essential components, and the connection relationship of the main components of the electronic device 201 described above with reference to FIG. 2 may be changed according to various embodiments.

An electronic device (e.g., the electronic device 101 of FIG. 1 or the electronic device 201 of FIG. 2) according to an embodiment may include communication circuitry (e.g., the communication module 190 of FIG. 1 or the communication circuitry 290 of FIG. 2), a display (e.g., the display 160 of FIG. 1 or the display 260 of FIG. 2), memory (e.g., the memory 130 of FIG. 1 or the memory 230 of FIG. 2) storing instructions, and a processor (e.g., the processor 130 of FIG. 1 or the processor 230 of FIG. 2) operatively connected to the communication circuitry, the display, and the memory. The instructions according to an embodiment may be configured to cause, when executed by the processor, the electronic device to search for previous conversation message with a counterpart in a state in which a message recommendation function is activated while a conversation screen with the counterpart is displayed on the display. The instructions may be configured to cause, when executed by the processor, the electronic device to, when there is at least one previous conversation message with the counterpart within a specified period, transfer a response request prompt to an AI model by generating the response request prompt using the at least one previous conversation message. The instructions may be configured to cause, when executed by the processor, the electronic device to obtain, through the AI model, response messages corresponding to the response request prompt and display the response messages on the conversation screen. The instructions may be configured to cause, when executed by the processor, the electronic device to, when at least one previous conversation message with the counterpart does not exist within the specified period, transfer a greeting request prompt to the AI model by generating the greeting request prompt. The instructions may be configured to cause, when executed by the processor, the electronic device to obtain, through the AI model, greeting messages corresponding to the greeting request prompt and display the greeting messages on the conversation screen.

The instructions according to an embodiment may be configured to cause, when executed by the processor, the electronic device to transmit, through the communication circuitry, a response message selected by a user input among the response messages to the counterpart or transmit, through the communication circuitry, a greeting message selected by a user among the greeting messages to the counterpart.

The instructions according to an embodiment may be configured to cause, when executed by the processor, the electronic device to identify whether to use an AI model of the electronic device or a cloud AI model of an external electronic device as the AI model, when using the AI model of the electronic device, obtain, through the AI model of the electronic device, the response messages corresponding to the response request prompt, and when using the cloud AI model, transmit, through the communication circuitry, the response request prompt to the external electronic device, and receive response messages obtained using the cloud AI model from the external electronic device.

The response request prompt according to an embodiment may include a command, a response format, and an input, to be input to the AI model. The input according to an embodiment may include the at least one previous conversation message and author information of the at least one previous conversation message.

The instructions according to an embodiment may be configured to cause, when executed by the processor, the electronic device to block displaying of the response messages when the at least one previous conversation message and/or the response messages include a specified inappropriate expression.

The instructions according to an embodiment may be configured to cause, when executed by the processor, the electronic device to identify the format of each of the response messages and, when the format of each of the response messages is not a specified format, change the format of each of the response messages to the specified format.

The instructions according to an embodiment may be configured to cause, when executed by the processor, the electronic device to identify whether a response message in a first language different from a second language of the at least one previous conversation message exists among the response messages and display remaining response messages in the second language, except for the response message in the identified first language, among the response messages.

The instructions according to an embodiment may be configured to cause, when executed by the processor, the electronic device to identify similarities between the response messages, based on the similarities, when there are a plurality of similar response messages among the response messages, identify one of the plurality of similar response messages, and remove remaining similar response messages except for one of the plurality of similar response messages.

The instructions according to an embodiment may be configured to cause, when executed by the processor, the electronic device to, when the number of the greeting messages is less than a specified number, obtain at least one additional greeting message using greeting data sets prestored in the memory and display the greeting messages and the at least one additional greeting message on the conversation screen.

The instructions according to an embodiment may be configured to cause, when executed by the processor, the electronic device to select a greeting data set according to time, date, and/or language among the greeting data sets and obtain at least one additional greeting message using the selected greeting data set.

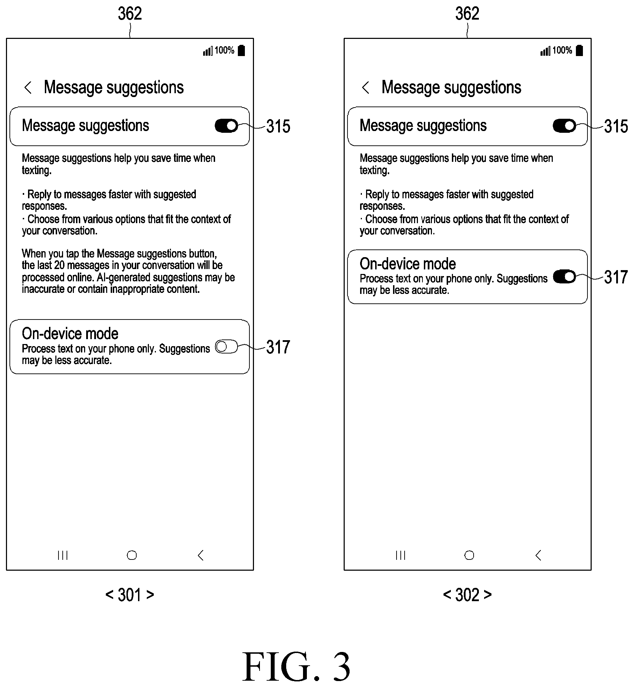

FIG. 3 is a diagram illustrating an example of a conversation message recommendation function configuration screen using an AI model according to an embodiment.

Referring to FIG. 3, a processor (e.g., the processor 120 of FIG. 1 or the processor 220 of FIG. 2) of an electronic device (e.g., the electronic device of FIG. 1 or the electronic device 201 of FIG. 2) according to an embodiment may display a conversation message recommendation function configuration screen 362 using an AI model on the display 260.

The processor 220 according to an embodiment may display a message suggestions icon 315 for configuring whether a conversation message recommendation function using an AI model is activated and an on-device mode icon 317 for configuring whether an on-device AI model is used on the conversation message recommendation function configuration screen 362 using the AI model.

The processor 220 according to an embodiment may activate the conversation message recommendation function using the AI model, based on the message suggestions icon 315 being selected in the on state, and may deactivate the conversation message recommendation function using the AI model, based on the message suggestions icon 315 being selected in the off state.

The processor 220 according to an embodiment may be configured (to be in a mode using the cloud-based AI model) to use the cloud AI model, not the AI model 232 of the electronic device 201 to recommend the conversation message, based on the on-device mode icon 317 being selected in the off state, while the message suggestions icon 315 is configured to be in the on state as in <301>.

The processor 220 according to an embodiment may be configured (to be in a mode using the on-device-based AI model) to use the AI model 232 of the electronic device 201, not the cloud AI model to recommend the conversation message, based on the on-device mode icon 317 being selected in the on state, while the message suggestions icon 315 is configured to be in the on state as in <302>.

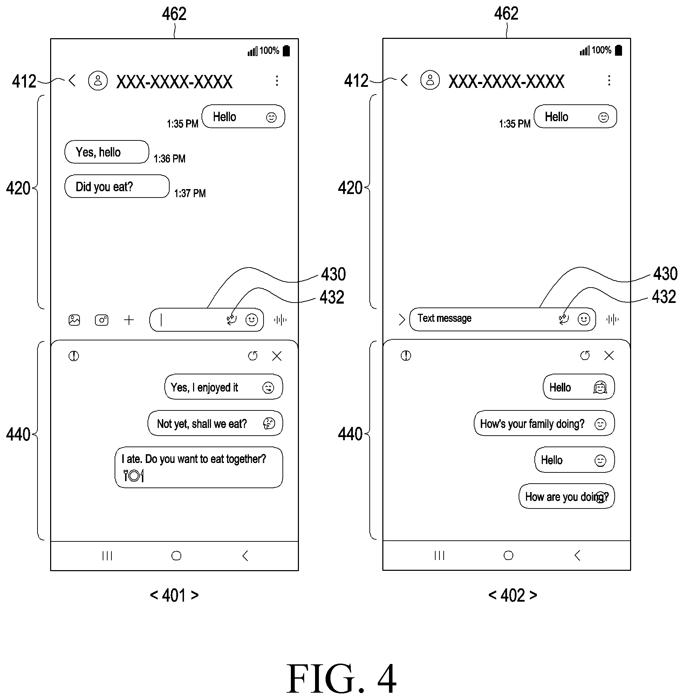

FIG. 4 is a diagram illustrating a conversation screen with a counterpart according to an embodiment.

Referring to FIG. 4, a processor (e.g., the processor 120 of FIG. 1 or the processor 220 of FIG. 2) of an electronic device (e.g., the electronic device of FIG. 1 or the electronic device 201 of FIG. 2) according to an embodiment may display a conversation screen 462 for exchanging conversation messages with a counterpart on the display 260, based on execution of a message application (e.g., an interactive message application). For example, the message application may be a chatting application, an instant message application, a short message service (SMS) message application, or an application capable of exchanging messages in a manner of having a conversion with a counterpart. The conversation screen 462 according to an embodiment may include information 412 (e.g., a user ID, a phone number, or a user account) (xxx-xxxx-xxxx) of a counterpart who is another user exchanging conversation messages with the user of the electronic device 201, a conversation message display area 420, an input message display area 430, and a conversation message recommendation area 440.

The processor 220 according to an embodiment may display a visual object 432 related to a message recommendation function while displaying the conversation screen 462 with the counterpart. When receiving an input for selecting the visual object 432 related to the message recommendation function, the processor 220 according to an embodiment may activate the message recommendation function.

When there is a previous conversation message with the counterpart within a predetermined period in the state where the message recommendation function is activated while the conversation screen 462 with the counterpart is displayed, the processor 220 according to an embodiment may display response messages (e.g., "Yes, I enjoyed it. 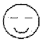 ", "Not yet, shall we eat? 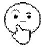 ", "I ate. Do you want to eat together? 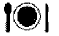 ") obtained through provision of a response request prompt using previous conversation messages with the counterpart (e.g., Yes, hello", and "Did you eat?") to an AI model (e.g., the AI model 232 or the cloud AI model) in the conversation message recommendation area 440 as in <401>.

When there is no previous conversation message with the counterpart within a predetermined period in the state where the message recommendation function is activated while the conversation screen 462 with the counterpart is displayed, the processor 220 according to an embodiment may display greeting messages (e.g., "Hello 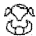 ", How's your family doing? 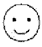 ", "Hello 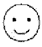 ", and "How are you doing? 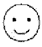 ") obtained through provision of a greeting request prompt to an AI model (e.g., the AI model 232 or the cloud AI model) in the conversation message recommendation area 440 as in <402>.

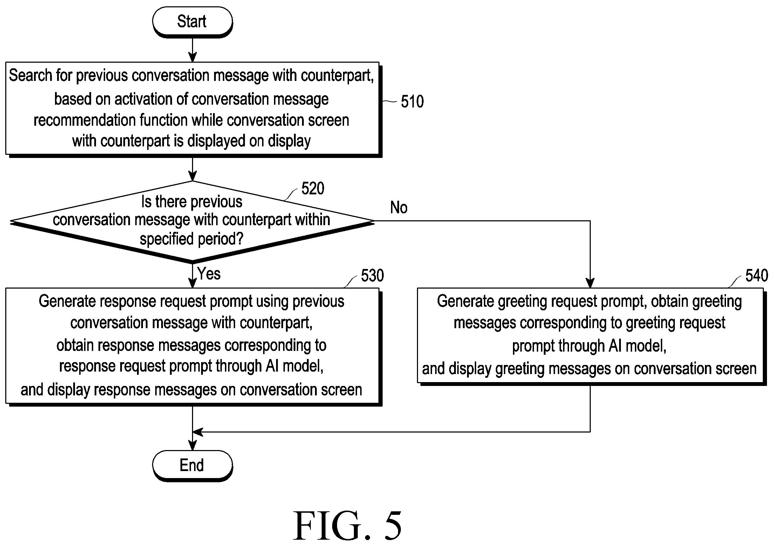

FIG. 5 is a flowchart illustrating a conversation message recommendation operation using an AI model by an electronic device according to an embodiment.

Referring to FIG. 5, a processor (e.g., the processor 120 of FIG. 1 or the processor 220 of FIG. 2) of an electronic device (e.g., the electronic device 101 of FIG. 1 or the electronic device 201 of FIG. 2) according to an embodiment may perform at least one of operations 510 to 540.

In operation 510, the processor 220 according to an embodiment may search for (or identify) a previous conversation message with a counterpart, based on activation of a conversation message recommendation function while displaying a conversation screen with the counterpart on the display 260. The processor 220 according to an embodiment may display a conversation screen for transmitting and receiving a conversation message with a counterpart on the display 260, based on execution of a message application (e.g., an interactive message application). For example, the message application may be a chatting application, an instant message application, a short message service (SMS) message application, or an application capable of exchanging messages in a manner of having a conversion with a counterpart. According to an embodiment, the processor 220 may identify whether a conversation message recommendation function is activated while displaying the conversation screen with the counterpart on the display 260. The counterpart according to an embodiment may refer to another user who exchanges conversation messages with the user of the electronic device 201, and the user and the counterpart may use unique user IDs, phone numbers, or user accounts, respectively. The conversation message recommendation function according to an embodiment may be a conversation message recommendation function using an AI model.

In operation 520, the processor 220 according to an embodiment may determine (identify or check) whether there is a previous conversation message with the counterpart within a predetermined period, based on the result of identifying the previous conversation message with the counterpart. For example, the predetermined period may be 24 hours or several days, but may be specified as a shorter or longer period.

In operation 530, when there is a previous conversation message with the counterpart within a predetermined period, the processor 220 according to an embodiment may generate a response request prompt by using the previous conversation message with the counterpart, obtain response messages corresponding to the response request prompt through the AI model, and display the response messages on the conversation screen. The answer request prompt according to an embodiment may include natural language or a function (or instruction) to be input to an AI model to recommend an answer message reflecting a context, a topic, a tone, various variables (e.g., a language, a time, a date, or a place), or an emoji in the content of the previous conversation message with the counterpart. The processor 220 according to an embodiment may obtain response messages corresponding to the response request prompt through the AI model. The processor 220 according to an embodiment may obtain response messages corresponding to the response request prompt through the on-device-based AI model 232 (hereinafter, also referred to as the AI model 232) inside the electronic device 201 or a cloud-based AI model (not shown) (e.g., an AI model (not shown) included in the server 108) (hereinafter, also referred to as a cloud AI model) outside the electronic device 201. The processor 220 according to an embodiment may determine whether to use (or transfer) the response request prompt by using the AI model 232 or the cloud AI model, based on configuration information, a prompt type, a prompt size, a communication state with a cloud server, and/or a load level of the electronic device 201.

The processor 220 according to an embodiment may transfer the response request prompt to the AI model 232 or the cloud AI model, and may obtain response messages corresponding to the response request prompt from the AI model 232 or the cloud AI model. The processor 220 according to an embodiment may display the response messages on a conversation screen (e.g., in the conversation message recommendation area 440 of the conversation screen). The processor 220 according to an embodiment may obtain response messages that do not include expressions of a sexual expression category (Sexual), a derogatory expression category (Derogatory), a toxic expression category (Toxic), a violent expression category (Violent), an insulting expression category (Insult), a profane expression category (Profanity), a drug-related expression category (Drugs), and/or a category associated with an expression that may cause discomfort to the counterpart, perform output format verification of the response messages, verification of usefulness of the output content, and/or verification of validity of the output content, and display, on the conversation screen, response messages, for which the output format verification, the verification of the usefulness of the output content, and/or the verification of the validity of the output content have been completed. The processor 220 according to an embodiment may transmit a response message selected by the user from response messages displayed on the conversation screen to the counterpart through the communication circuitry 290.

In operation 540, when there is no previous conversation message with the counterpart within a predetermined period, the processor 220 according to an embodiment may generate a greeting request prompt, obtain greeting messages corresponding to the greeting request prompt through an AI model (e.g., the AI model 232 or a cloud AI model), and display the greeting messages on the conversation screen. When there is no previous conversation message with the counterpart within the predetermined period, the greeting request prompt according to an embodiment may include a natural language or a function (or command) to be input to the AI model 232 or the cloud AI model to recommend a greeting message to be transferred to the counterpart. The processor 220 according to an embodiment may transfer greeting messages corresponding to the greeting request prompt to the AI model 232 or the cloud AI model and display greeting messages obtained from the AI model 232 or the cloud AI model on the conversation screen. The processor 220 according to an embodiment may determine whether to use (or transfer) the AI model 232 or the cloud AI model for the response request prompt, based on the configuration information, the prompt type, the prompt size, the communication state with the cloud server, and/or the load level of the electronic device 201. The processor 220 according to an embodiment may transfer the greeting request prompt to the AI model 232 or the cloud AI model and obtain greeting messages corresponding to the greeting request prompt from the AI model 232 or the cloud AI model. When the number of greeting messages obtained from the AI model 232 or the cloud AI model (not shown) is less than 4 (or a predetermined number), the processor 220 according to an embodiment may generate additional at least one greeting message by using a greeting data set (e.g., a first greeting data set by time or date) stored in the memory 230 of the electronic device 201, and display the greeting messages obtained from the AI model 232 or the cloud AI model (not shown) and at least one greeting message generated by the electronic device 201 itself on the conversation screen. For example, the processor 220 may generate at least one greeting message by using a plurality of different greeting data sets according to a specific day (e.g., Chuseok or the Lunar New year), a weekday and a weekend, or morning, afternoon, and evening. The processor 220 according to an embodiment may transmit a greeting message selected by the user among the greeting messages displayed on the conversation screen to the counterpart through the communication circuitry 290.

A method of recommending a conversation message using an AI model by an electronic device (e.g., the electronic device 101 of FIG. 1 or the electronic device 201 of FIG. 2) according to an embodiment of the disclosure may include an operation of searching for a previous conversation message with a counterpart in a state in which a message recommendation function is activated while a conversation screen with the counterpart is displayed on a display (e.g., the display module 160 of FIG. 1 or the display 260 of FIG. 2) of the electronic device. The method according to an embodiment may include, when there is at least one previous conversation message with the counterpart within a specified period, transferring a response request prompt to an AI model by generating the response request prompt using the at least one previous conversation message. The method according to an embodiment may include an operation of obtaining, through the AI model, response messages corresponding to the response request prompt, and displaying the response messages on the conversation screen. The method according to an embodiment may include, when at least one previous conversation message with the counterpart does not exist within the specified period, transferring a greeting request prompt to the AI model by generating the greeting request prompt. The method may include an operation of obtaining, through the AI model, greeting messages corresponding to the greeting request prompt, and displaying the greeting messages on the conversation screen.

The method according to an embodiment may further include an operation of transmitting, through the communication circuitry, a response message selected by a user input among the response messages to the counterpart or an operation of transmitting, through the communication circuitry, a greeting message selected by a user among the greeting messages to the counterpart.

The method according to an embodiment may include an operation of identifying whether to use an AI model of the electronic device or a cloud AI model of an external electronic device as the AI model, an operation of, when using the AI model of the electronic device, obtaining, through the AI model of the electronic device, the response messages corresponding to the response request prompt, and an operation of, when using the cloud AI model, transmitting, through the communication circuitry, the response request prompt to the external electronic device and receiving response messages obtained using the cloud AI model from the external electronic device.

The response request prompt in the method according to an embodiment may include a command, a response format, and an input, to be input to the AI model, and input may include the at least one previous conversation message and author information of the at least one previous conversation message.

The method according to an embodiment may further include an operation of blocking displaying of the response messages when the at least one previous conversation message and/or the response messages include a specified inappropriate expression.

The method according to an embodiment may further include an operation of identifying the format of each of the response messages and, when the format of each of the response messages is not a specified format, changing the format of each of the response messages to the specified format.

The method according to an embodiment may further include an operation of identifying whether a response message in a first language different from a second language of the at least one previous conversation message exists among the response messages and displaying remaining response messages in the second language, except for the response message in the identified first language, among the response messages.

The method according to an embodiment may further include an operation of identifying similarities between the response messages, based on the similarities, when there are a plurality of similar response messages among the response messages, identifying one of the plurality of similar response messages, and removing remaining similar response messages except for one of the plurality of similar response messages.

The method according to an embodiment may further include an operation of, when the number of the greeting messages is less than a specified number, selecting greeting data sets according to time, date, and/or language among greeting data sets prestored in the memory, obtaining at least one additional greeting message using the selected greeting data sets, and displaying the greeting messages and the at least one additional greeting message on the conversation screen.

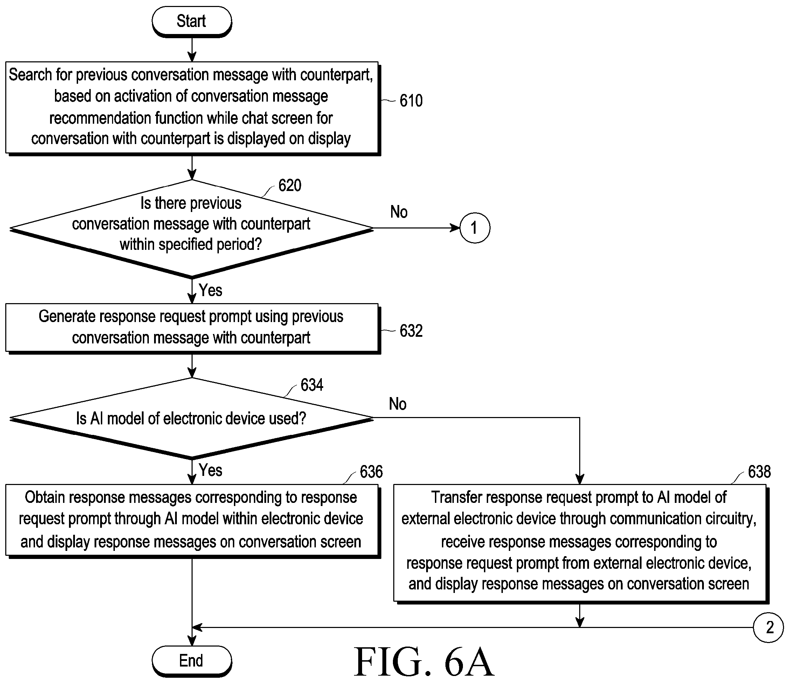

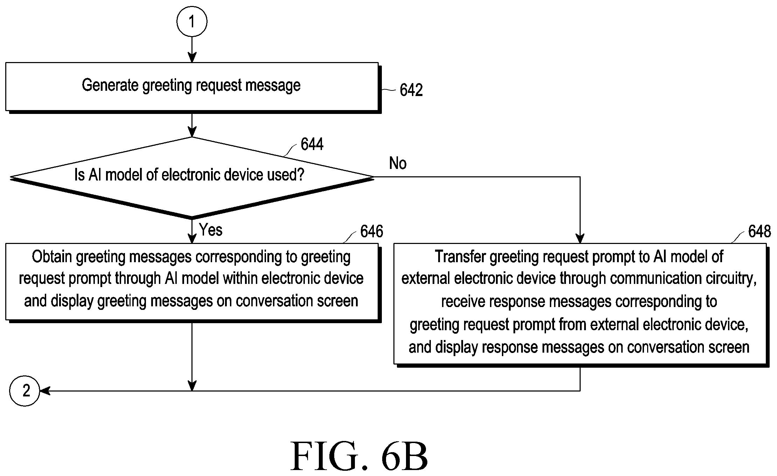

FIG. 6A is a flowchart illustrating a conversation message recommendation operation using an on-device-based AI model or a cloud-based AI model by an electronic device according to an embodiment, and FIG. 6B is a flowchart continuing from FIG. 6A.

Referring to FIG. 6A and FIG. 6B, a processor (e.g., the processor 120 of FIG. 1 or the processor 220 of FIG. 2) of an electronic device (e.g., the electronic device 101 of FIG. 1 or the electronic device 201 of FIG. 2) according to an embodiment may perform at least one of operations 610 to 648.

In operation 610, the processor 220 according to an embodiment may search for (or identify) a previous conversation message with a counterpart, based on activation of a conversation message recommendation function while displaying a conversation screen with the counterpart on the display 260. The processor 220 according to an embodiment may display a conversation screen for transmitting and receiving a conversation message with a counterpart on the display 260, based on execution of a message application (e.g., an interactive message application). For example, the message application may be a chatting application, an instant message application, a short message service (SMS) message application, or an application capable of exchanging messages in a manner of having a conversion with a counterpart. According to an embodiment, the processor 220 may identify whether a conversation message recommendation function is activated while displaying the conversation screen with the counterpart on the display 260. The counterpart according to an embodiment may refer to another user who exchanges conversation messages with the user of the electronic device 201, and the user and the counterpart may use unique user IDs, phone numbers, or user accounts, respectively. The recommendation function according to an embodiment may be a conversation message recommendation function using an AI model.

In operation 620, the processor 220 according to an embodiment may determine (identify or check) whether there is a previous conversation message with the counterpart within a predetermined period, based on the result of identifying the previous conversation message with the counterpart. For example, the predetermined period may be 24 hours or several days, but may be specified as a shorter or longer period.

In operation 632, when there is a previous conversation message with a counterpart within a predetermined period, the processor 220 according to an embodiment may generate a response request prompt by using the previous conversation message with the counterpart. The answer request prompt according to an embodiment may include natural language or a function (or command) to be input to an AI model to recommend an answer message reflecting a context, a topic, a tone, various variables (e.g., a language, a time, a date, or a place), or an emoji in the content of the previous conversation message with the counterpart.

In operation 634, the processor 220 according to an embodiment may determine (identify or check) the state in which the on-device-based AI model 232 is configured to be used for recommending the conversation message. The processor 220 according to an embodiment may determine whether the on-device-based AI model 232 is configured to be used according to the stored configuration information in the state where the configuration information indicating whether to use the on-device-based AI model 232 or the cloud AI model is stored.

In operation 636, when it is configured to use the on-device based AI model 232, the processor 220 according to an embodiment may obtain response messages corresponding to the response request prompt through the AI model 232 inside the electronic device 201 and display the response messages on the conversation screen. The processor 220 according to an embodiment may obtain response messages that do not include expressions of a sexual expression category (Sexual), a derogatory expression category (Derogatory), a toxic expression category (Toxic), a violent expression category (Violent), an insulting expression category (Insult), a profane expression category (Profanity), a drug-related expression category (Drugs), and/or a category associated with an expression that may cause discomfort to the counterpart, perform output format verification of the response messages, verification of usefulness of the output content, and/or verification of validity of the output content, and display, on the conversation screen, response messages, for which the output format verification, the verification of the usefulness of the output content, and/or the verification of the validity of the output content have been successful (or completed) among the response messages.

In operation 638, when it is not configured to use the on-device-based AI model 232, the processor 220 according to an embodiment may transfer the response request prompt to the cloud-based AI model of an external electronic device through the communication circuitry 290, receive response messages corresponding to the response request prompt from the external electronic device, and display the response messages on the conversation screen. The processor 220 according to an embodiment may receive response messages that do not include expressions of a sexual expression category (Sexual), a derogatory expression category (Derogatory), a toxic expression category (Toxic), a violent expression category (Violent), an insulting expression category (Insult), a profane expression category (Profanity), a drug-related expression category (Drugs), and/or a category associated with an expression that may cause discomfort to the counterpart, perform output format verification of the response messages, verification of usefulness of the output content, and/or verification of validity of the output content, and display, on the conversation screen, response messages, for which the output format verification, the verification of the usefulness of the output content, and/or the verification of the validity of the output content have been successful (or completed).

In operation 642, when there is no previous conversation message with the counterpart within a predetermined period, the processor 220 according to an embodiment may generate a greeting request prompt. When there is no previous conversation message with the counterpart within the predetermined period, the greeting request prompt according to an embodiment may include a natural language or a function (or instruction) to be input to the AI model 232 or the cloud AI model to recommend a greeting message to be transferred to the counterpart.

In operation 644, the processor 220 according to an embodiment may determine (identify or check) the state in which the on-device-based AI model 232 is configured to be used for recommending the conversation message. The processor 220 according to an embodiment may determine whether the on-device-based AI model 232 is configured to be used according to the stored configuration information in the state where the configuration information indicating whether to use the on-device-based AI model 232 or the cloud AI model is stored.

In operation 646, when it is configured to use the on-device-based AI model 232, the processor 220 according to an embodiment may obtain greeting messages corresponding to a greeting request prompt through the AI model 232 inside the electronic device 201 and display the greeting messages on the conversation screen. When the number of greeting messages obtained from the AI model 232 is less than a predetermined number (e.g., 4) , the processor 220 according to an embodiment may generate an additional greeting message by using a greeting data set (e.g., a first greeting dataset by time or date) stored in the memory 230 of the electronic device 201 and display the greeting messages obtained from the AI model 232 and the greeting message generated using the greeting data set by the electronic device 201 on the conversation screen. For example, the processor 220 may generate a greeting message by using a plurality of different greeting data sets according to a specific day (e.g., Chuseok or Lunar New Year), weekday or weekend, or morning, afternoon, or evening.

In operation 648, when it is not configured to use the on-device-based AI model 232, the processor 220 according to an embodiment may transfer the greeting request prompt to the cloud-based AI model of the external electronic device through the communication circuitry 290, receive greeting messages corresponding to the greeting request prompt from the external electronic device, and display the greeting messages on the conversation screen. When the number of greeting messages received from the external electronic device is less than a predetermined number (e.g., 4), the processor 220 according to an embodiment may generate an additional greeting message by using a greeting data set (e.g., a first greeting data set per time or date) stored in the memory 230 of the electronic device 201 and may display the greeting message received from the external electronic device and the greeting message generated using the greeting data set by the electronic device 201 on the conversation screen.

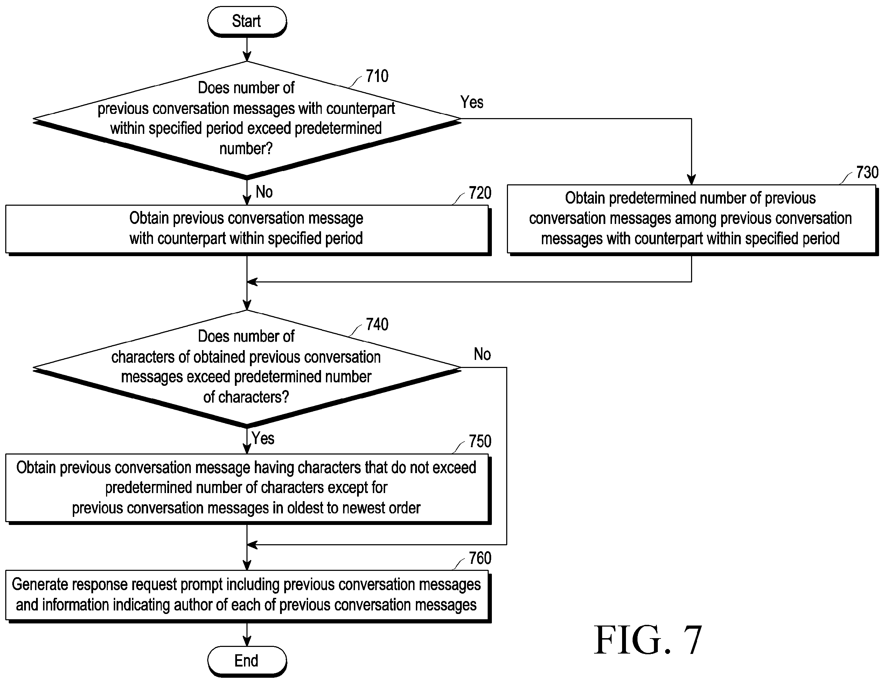

FIG. 7 is a diagram illustrating a response message request prompt generation operation according to an embodiment.

Referring to FIG. 7, a processor (e.g., the processor 120 of FIG. 1 or the processor 220 of FIG. 2) of an electronic device (e.g., the electronic device 101 of FIG. 1 or the electronic device 201 of FIG. 2) according to an embodiment may perform at least one of operations 710 to 760.

In operation 710, the processor 220 according to an embodiment may determine (identify or check) whether the number of previous conversation messages with the counterpart exceeds a predetermined number within a predetermined period. According to an embodiment, the predetermined number may be 20, and other numbers may also be possible. The processor 220 according to an embodiment may determine (identify or check) whether the number of previous conversation messages with the counterpart exceeds a predetermined number (e.g., 20), based on activation of a conversation message recommendation function, while displaying the conversation screen with the counterpart on the display 260.

In operation 720, when the number of previous conversation messages with the counterpart within the predetermined period does not exceed the predetermined number, the processor 220 according to an embodiment may obtain the previous conversation message with the counterpart (as it is) within the predetermined period.

In operation 730, when the number of previous conversation messages with the counterpart within the predetermined period exceeds the predetermined number, the processor 220 according to an embodiment may obtain the predetermined number of previous conversation messages among the previous conversation messages with the counterpart within the predetermined period. The processor 220 according to an embodiment may obtain a predetermined number of previous conversation messages except for the previous conversation messages in oldest to newest order. For example, the time criterion for determining whether previous conversation messages are old may use an updated time. The updated time may indicate a time at which a message is updated, such as "read" or "transferred".

In operation 740, the processor 220 according to an embodiment may determine (identify or check) whether the number of characters of the obtained previous conversation messages exceeds a predetermined number of characters. According to an embodiment, the predetermined number of characters may be specified differently according to the processing capability or language of the AI model. According to an embodiment, the predetermined number of characters when the previous conversation messages are input to the on-device-based AI model 232 may be smaller than the predetermined number of characters when the previous conversation messages are input to the cloud-based AI model. For example, when the previous conversation messages are in Korean, the number of characters of the previous conversation messages input to the on-device-based AI model 232 may be limited to 1000, and the number of characters of the previous conversation messages input to the cloud-based AI model may be limited to 10000. For example, when previous conversation messages are in English, the number of characters in the previous conversation messages input to the on-device-based AI model 232 may be limited to 2500, and the number of characters in the previous conversation messages input to the cloud-based AI model may be limited to 25000. The limited number of characters according to an embodiment may not be limited to a specific number, and may be adjustable to other limited numbers of characters by a developer or an operator. The processor 220 according to an embodiment may perform operation 750 when the number of characters of the obtained previous conversation messages exceeds a predetermined number of characters, and may perform operation 760 when the number of characters of the obtained previous conversation messages does not exceed the predetermined number of characters.

In operation 750, the processor 220 according to an embodiment may exclude some of the previous conversation messages in oldest to newest order and obtain previous conversation messages which do not exceed a predetermined number of characters. For example, the time criterion for determining whether previous conversation messages are old may use an update time. The updated time may indicate a time at which a message is updated, such as "read" or "transferred".

In operation 760, the processor 220 according to an embodiment may generate a response request prompt including the previous conversation messages and information (prefix) indicating the author of each of the previous conversation messages. The processor 220 according to an embodiment may select previous conversation messages and information (prefix) indicating the author of each of the previous conversation messages as an input of the response request prompt and generate a response request prompt including the input. For example, among the previous conversation messages, the processor 220 may add a prefix such as "user" in front of the conversation message written by the user in the conversation messages written by the user of the electronic device 201, add a prefix such as "others" in front of the conversation message written by the counterpart, and add the previous conversations messages to which the prefix has been added as an input of the response request prompt to generate the response request prompt. The prefix according to an embodiment may help an AI model (e.g., the AI model 232 or a cloud-based AI model) identify the user and the counterpart who are authors of previously written conversation messages and generate responses suitable for the user and the counterpart.

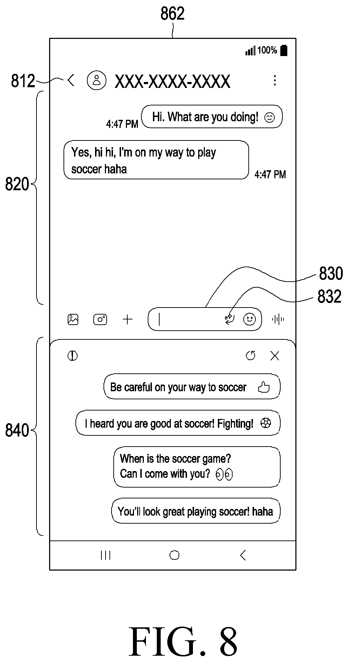

FIG. 8 is a diagram illustrating an example of a conversation message recommendation screen using an AI model according to an embodiment.

Referring to FIG. 8, a processor (e.g., the processor 120 of FIG. 1 or the processor 220 of FIG. 2) of an electronic device (e.g., the electronic device of FIG. 1 or the electronic device 201 of FIG. 2) according to an embodiment may display a conversation screen 862 for exchanging a conversation message with a counterpart on the display 260, based on execution of a message application (e.g., an interactive message application). The conversation screen 862 according to an embodiment may include information 812 (e.g., a user ID, a phone number, or a user account) (xxx-xxxx-xxxx) of a counterpart who is another user exchanging conversation messages with the user of the electronic device 201, a conversation message display area 820, an input message display area 830, and a conversation message recommendation area 840. The processor 220 according to an embodiment may display an icon 832 for selecting and indicating activation (or deactivation) of the conversation message recommendation function using an AI model in the input message display area 830.

When receiving messages from the counterpart such as "Yes, hi hi, I'm on my way to play soccer haha" in the state where the conversation message recommendation function 832 is activated while displaying the conversation screen 862 with the counterpart, the processor 220 according to an embodiment may provide an AI model (e.g., the AI model 232 or the cloud AI model) with a response request prompt using the previous conversation messages with the counterpart and display response messages (e.g., "Be careful on your way to soccer! 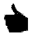 ", "I heard you are good at soccer! You've got this! 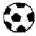 ", "When is the soccer game? Can I come with you? 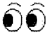 ", "You'll look great playing soccer haha") in the conversation message recommendation area 840.

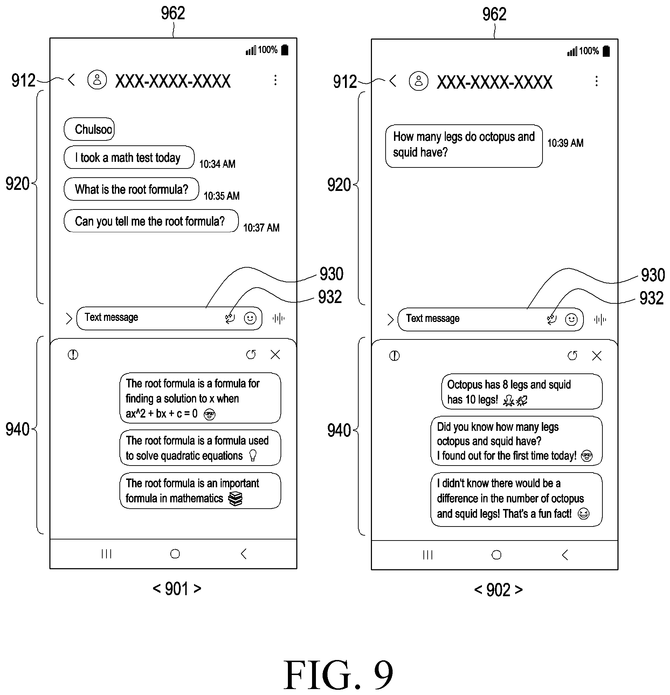

FIG. 9 is a diagram illustrating an example of a conversation message recommendation screen using an AI model when a knowledge-based question is received according to an embodiment.

Referring to FIG. 9, a processor (e.g., the processor 120 of FIG. 1 or the processor 220 of FIG. 2) of an electronic device (e.g., the electronic device of FIG. 1 or the electronic device 201 of FIG. 2) according to an embodiment may display a conversation screen 962 for exchanging conversation messages with a counterpart on the display 260, based on execution of a message application (e.g., an interactive message application). The conversation screen 962 according to an embodiment may include information 912 (e.g., a user ID, a phone number, or a user account) (xxx-xxxx-xxxx) of a counterpart who is another user exchanging conversation messages with the user of the electronic device 201, a conversation message display area 920, an input message display area 930, and a conversation message recommendation area 940. The processor 220 according to an embodiment may display an icon 930 for selecting and indicating activation (or deactivation) of the conversation message recommendation function using an AI model in the input message display area 932.

When receiving messages including knowledge-based questions from the counterpart such as "Chulsoo", "I took a math test today," "What is the root formula?" and "Can you tell me the root formula?" in the state where the conversation message recommendation function 932 is activated while displaying the conversation screen 962 with the counterpart as in <901>, the processor 220 according to an embodiment may provide an AI model (e.g., the AI model 232 or the cloud AI model) with a response request prompt using previous conversation messages with the counterpart and display response messages including search results for responses to the question (e.g., "The root formula is a formula for finding a solution to x when ax^2 + bx + c = 0." 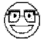 , "The root formula is a formula used to solve quadratic equations 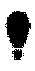 . "The root formula is an important formula in mathematics. 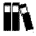 ") in the conversation message recommendation area 940.

When receiving messages including knowledge-based questions from the counterpart such as "How many legs do the octopus and squid have?" in the state where the conversation message recommendation function 932 is activated while displaying the conversation screen 962 with the counterpart as in <902>, the processor 220 according to an embodiment may provide an AI model (e.g., the AI model 232 or the cloud AI model) with a response request prompt using previous conversation messages with the counterpart and display response messages including search results for responses to the question (e.g., the octopus has 8 legs and the squid has 10 legs! 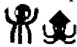 ", "Did you know how many legs do the octopus and squid have? I found out for the first time today. 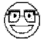 ", "I didn't know there would be a difference in the number of octopus and squid legs! That's a fun fact! 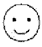 ") in the conversation message recommendation area 940.

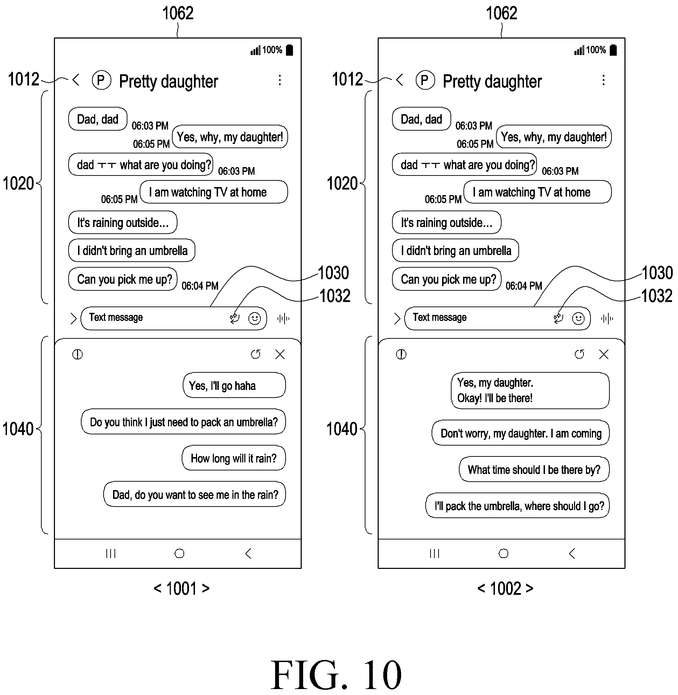

FIG. 10 is a diagram illustrating an example of a conversation message recommendation screen using an AI model when a response request prompt that does not include an author of each of previous dialogue messages is used and when a response request prompt that includes the author of each of the previous dialogue messages is used, according to an embodiment.

Referring to FIG. 10, a processor (e.g., the processor 120 of FIG. 1 or the processor 220 of FIG. 2) of an electronic device (e.g., the electronic device of FIG. 1 or the electronic device 201 of FIG. 2) according to an embodiment may display a conversation screen 1062 for exchanging a conversation message with a counterpart on the display 260, based on execution of a message application (e.g., an interactive message application). The conversation screen 1062 according to an embodiment may include information 1012 (e.g., pretty daughter) of a counterpart who is another user exchanging conversation messages with a user (e.g., father) of the electronic device 201, a conversation message display area 1020, an input message display area 1030, and a conversation message recommendation area 1040. The processor 220 according to an embodiment may display an icon 1030 for selecting and indicating activation (or deactivation) of the conversation message recommendation function using an AI model in the input message display area 1032.

When providing a response request prompt that does not include an author (e.g., prefix) of each of the previous conversation messages to an AI model (e.g., the AI model 232 or the cloud AI model) as in <1001>, the processor 220 according to an embodiment may receive response messages that do not reflect the relationship between the user (dad) and the counterpart (pretty daughter) or their speech styles such as "Really? I'll come haha", "Do I just need to pack an umbrella?", "How long will it rain?" "Dad, do you want to see me get rained on?" and display the response messages in the conversation message recommendation area 1040.

When providing a response request prompt including an author of each of the previous conversation messages to an AI model (e.g., the AI model 232 or the cloud AI model) as in <1002>, the processor 220 according to an embodiment may receive response messages reflecting the relationship between the user (dad) and the counterpart (pretty daughter) or their speech styles such as "Really? I'll come haha", "Do I just need to pack an umbrella?", "How long will it rain?" "Dad, do you want to see me get rained on?" and display the response messages in the conversation message recommendation area 1040.

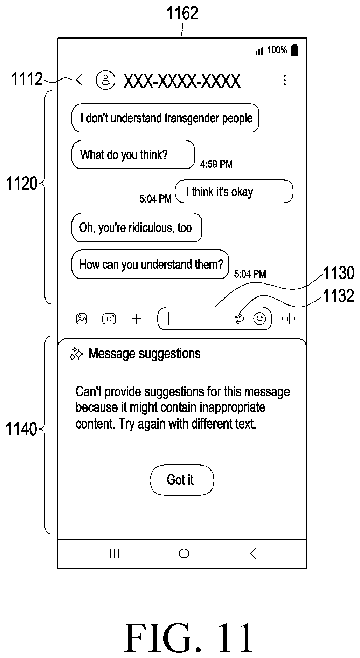

FIG. 11 is a diagram illustrating an example of a conversation message recommendation screen when an input of a response request prompt includes a sentence containing an inappropriate expression, according to an embodiment.

Referring to FIG. 11, a processor (e.g., the processor 120 of FIG. 1 or the processor 220 of FIG. 2) of an electronic device (e.g., the electronic device of FIG. 1 or the electronic device 201 of FIG. 2) according to an embodiment may display a conversation screen 1162 for exchanging conversation messages with a counterpart on the display 260, based on execution of a message application (e.g., an interactive message application). The conversation screen 1162 according to an embodiment may include information 1112 (e.g., xxx-xxxx-xxxx) of a counterpart who is another use exchanging conversation messages with a user of the electronic device 201, a conversation message display area 1120, an input message display area 1130, and a conversation message recommendation area 1140. An icon 1132 indicating activation (or deactivation) of a conversation message recommendation function using an AI model may be displayed in the input message display area 1130.

The processor 220 according to an embodiment may determine (or verify) whether previous conversation messages that may be the input of the response request prompt in the state where the conversation message recommendation function using the AI model is activated includes a sentence (or text) of inappropriate expressions (e.g., a sexual expression category (Sexual), a derogatory expression category (Derogatory), a toxic expression category (Toxic), a violent expression category (Violent), an insulting expression category (Insult), a profane expression category (Profanity), a drug-related expression category (Drugs), and/or a category associated with an expression that may cause discomfort to the counterpart). When the previous conversation messages that may be the input of the response request prompt includes the expressions of the sexual expression category (Sexual) such as "How can you understand transgender people?", the processor 220 according to an embodiment may display, in the conversation message recommendation area 1140, a message (e.g., Can't provide suggestions for this message because it might contain inappropriate content. Try again with different text.) indicating that the input includes the inappropriate content, so as to be unable to recommend a message.

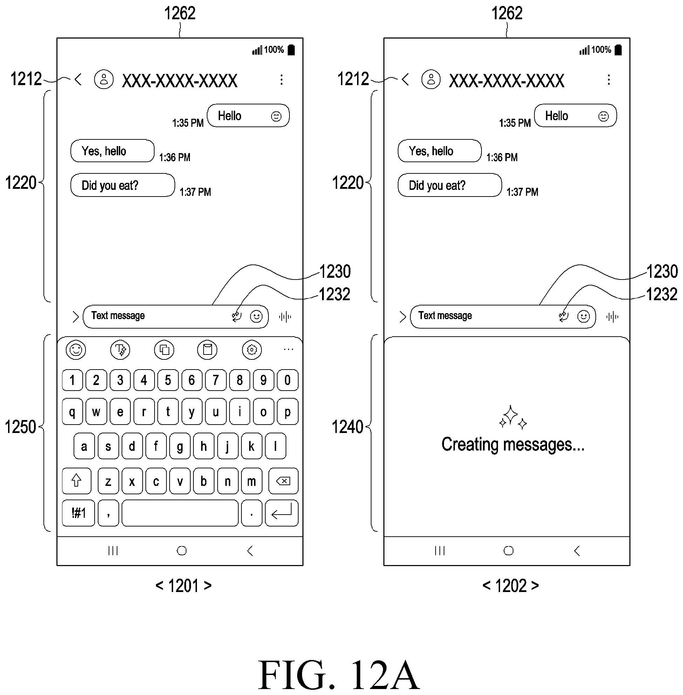

FIG. 12A is a diagram illustrating an example of a screen for displaying a conversation message recommendation area instead of a keypad for inputting a conversation message input according to activation of a conversation message recommendation function using an AI model while a conversation screen is displayed according to an embodiment.

Referring to FIG. 12A, a processor (e.g., the processor 120 of FIG. 1 or the processor 220 of FIG. 2) of an electronic device (e.g., the electronic device of FIG. 1 or the electronic device 201 of FIG. 2) according to an embodiment may display a conversation screen 1262 for exchanging conversation messages with a counterpart on the display 260, based on execution of a message application (e.g., an interactive message application). The conversation screen 1262 according to an embodiment may include information 1212 (e.g., a user ID, a phone number, or a user account) (xxx-xxxx-xxxx) of a counterpart who is another user exchanging conversation messages with a user of the electronic device 201, a conversation message display area 1220, an input message display area 1230, a conversation message recommendation area 1240, or a keypad 1250 for inputting a conversation message. An icon 1232 indicating activation (or deactivation) of a conversation message recommendation function using an AI model may be displayed in the input message display area 1230.

The processor 220 according to an embodiment may display a keypad 1250 for inputting a conversation message in the state in which the message recommendation function 1232 is deactivated while the conversation screen 1262 with the counterpart is displayed, as in <1201>. When the conversation message recommendation function is activated based on an input (e.g., a touch input) to the icon 1232, the processor 220 according to an embodiment may display the conversation message recommendation area 1240 instead of the keypad 1250. The icon 1232 according to an embodiment may be displayed with different visual effects when the conversation message recommendation function is activated and deactivated.

The processor 220 according to an embodiment may display a message such as "creating messages" in the conversation message recommendation area 1240 as in <1202> and may generate a response request prompt using previous conversation messages with the counterpart and provide the same to an AI model (e.g., the AI model 232 or a cloud AI model).

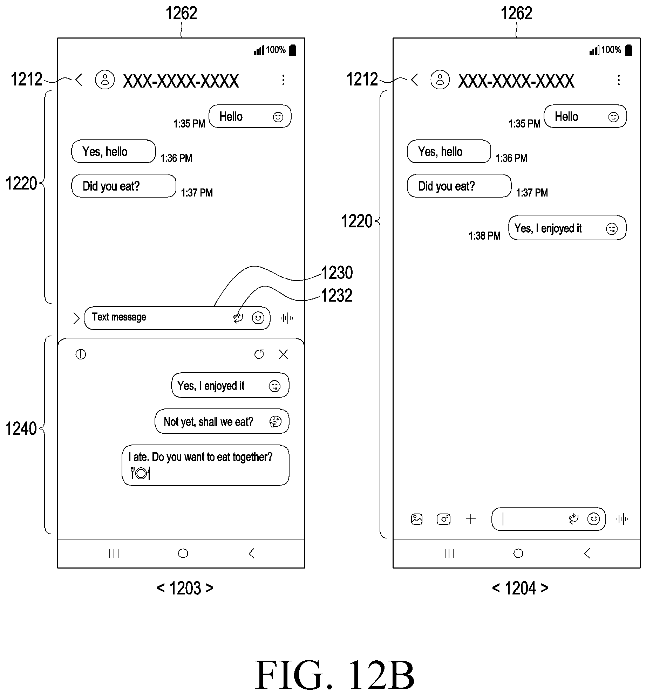

FIG. 12B is a diagram illustrating an example of a screen for displaying recommended response messages in a conversation message recommendation area and transmitting a selected response message to a counterpart in the state in which a conversation message recommendation function using an AI model is activated, according to an embodiment.

Referring to FIG. 12B, as in <1203>, the processor 220 according to an embodiment may provide an AI model (e.g., the AI model 232 or the cloud AI model) with a response request prompt using pervious conversation messages with the counterpart including "Yes, hello", "Did you eat?" and display response messages (e.g., Yes, I enjoyed it. 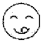 ", "Not yet, shall we eat? 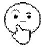 ", "I ate. Do you want to eat together? 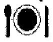 " in the conversation message recommendation area 1240.

The processor 220 according to an embodiment may transmit a message (e.g., "Yes, I enjoyed it. 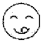 ") selected by the user among the response messages displayed in the conversation message recommendation area 1240 to the counterpart and display the message (e.g., "Yes, I enjoyed it. 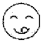 ") transmitted to the counterpart in the conversation message display area 1220 as in <1204>.

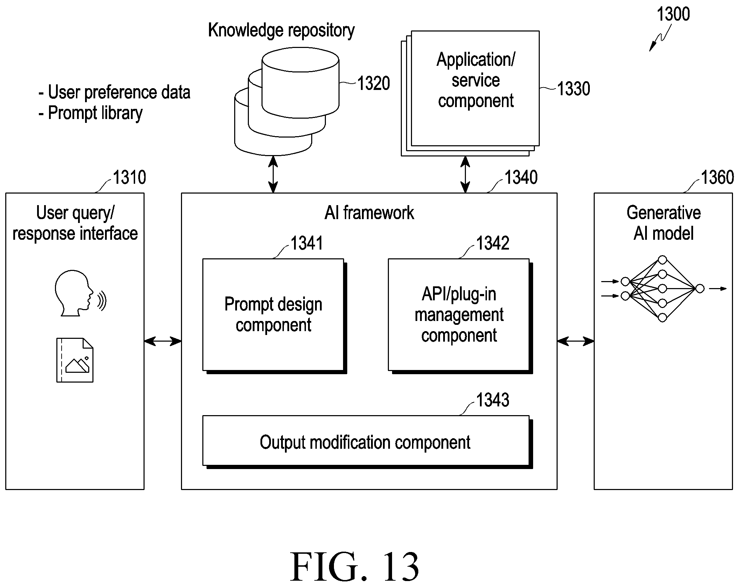

FIG. 13 is a diagram for illustrating a generative artificial intelligence system according to an embodiment.

In the generative artificial intelligence system 1300 according to an embodiment, a user query/response interface 1310 (e.g., the input module or display module 160 of FIG. 1 or the display 260 of FIG. 2) may receive a user input. The input of the user may be in the form of a natural language, an image, and/or a video, but is not limited thereto. In addition, when the user input is transmitted, context information may also be transmitted. The context information may include various pieces of additional information at a time of the user input. For example, the additional information may include application information currently used by the user or location information of the user. Further, the user input may also be in a mixed form of the above-described natural language, image, sound, and context information. In addition, the user input may also be in a non-natural language form, such as selection of a menu. The user query/response interface 1310 may output a result of the generative artificial intelligence system to the user. The output may be in the form of a natural language or a specific content, and may also be provided in the form of an action requested by the user. The user query/response interface 1310 may output a result of the generative artificial intelligence system to the user. The output may be in the form of a natural language or a specific content, and may also be provided in the form of an action requested by the user.

An AI framework 1340 (e.g., the processor 120 of FIG. 1 or the processor 220 of FIG. 2) may coordinate and control respective components necessary for receiving the user input and performing an intention of the user, based on a user's query.

The user input received in the user query/response interface 1310 may be transmitted to a prompt design component 1341 (e.g., the processor 120 of FIG. 1 or the processor 220 of FIG. 2). The prompt design component 1341 may be used to generate a prompt suitable for inputting the user input to a large language model (LLM) or a large multimodal model (LMM). The prompt design component 1341 may be an AI component that uses machine learning algorithms or neural networks to develop better prompts as time passes. The prompt design component 1341 may access a knowledge component including user preference data, a prompt library, and prompt examples, based on the user input, generate a prompt, and transfer the generated prompt to the LLM or the LMM.

When the user input is transferred as an input of a generative model (e.g., the AI model 232 or the cloud AI model of FIG. 2), an API/plug-in management component 1342 (e.g., the processor 120 of FIG. 1 or the processor 220 of FIG. 2) may serve to communicate with external information when there is a request for additional information. The API/plug-in management component 1342 may construct a channel for communicating with the outside of the AI interface through an API and access various data sources (e.g., a knowledge repository 1320) (e.g., the memory 130 of FIG. 1 or the memory 230 of FIG. 2) through the constructed channel. In addition, when an action for finally performing the user query rather than the intermediate result should be performed by an application or a service, the API/plug-in management component 1342 may make a request for the corresponding action to an application/service component 1330 (e.g., the processor 120 of FIG. 1 or the processor 220 of FIG. 2) through the API. Information secured from the outside may also be used by the prompt design component 1341 to generate a prompt together with the user input, or may be transferred as an input to the generative model (e.g., the AI model 232 of FIG. 2 or a cloud AI model).

An output modification component 1343 (also referred to as a refiner component) (e.g., the processor 120 of FIG. 1 or the processor 220 of FIG. 2) may finely tune a result output by a generative model (e.g., the AI model 232 of FIG. 2 or a cloud AI model). For example, the output modification component 1343 may verify whether the content generated through the LLM and/or the LMM is not irrelevant, does not include biased content, or does not include harmful content. In addition, the output modification component 1343 may determine how much the result matches the resulting output desired by the user, and may also perform a corresponding process if an additional process is required. The output modification component 1343 may additionally configure a hint for avoiding undesired output and provide the same to the user.

A generative AI model 1360 (e.g., the AI model 232 or the cloud AI model of FIG. 2) may generally refer to an artificial intelligence neural network that makes data in a new form dependent on user input information. The generative AI model 1360 may include a model for generating an image and/or a model for generating a language. The model for generating an image may representatively include a generative adversarial network (GAN) and a variational auto encoder (VAE), and a diffusion-based generative model using a transformer structure with the VAE may be given as an example. The model for generating a language is a model trained to output an output value that is statistically most appropriate based on the input value, and may representatively include models such as CHAT-GPT 3 and CHAT-GPT 4. In addition, there are large multimodal models (LMMs) capable of recognizing data inputs in various forms, such as text, images, and voice, and generating new data corresponding thereto.

According to various embodiments of the disclosure, a conversation message may be obtained and recommended using an artificial intelligence (AI) model to reflect the context, topic, or tone of previous conversation content with the counterpart and various environmental variables when transmitting and receiving conversation messages to and from the counterpart through a message application, which may be convenient.

The electronic device according to embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A non-transitory storage medium storing instructions according to an embodiment may be provided. The instructions may be configured to cause an electronic device to perform at least one operation when executed by the electronic device. The at least one operation may include searching for a previous conversation message with a counterpart in a state in which a message recommendation function is activated while a conversation screen with the counterpart is displayed on a display of the electronic device, when there is at least one previous conversation message with the counterpart within a specified period, transferring a response request prompt to an AI model by generating the response request prompt using the at least one previous conversation message, obtaining, through the AI model, response messages corresponding to the response request prompt, and displaying the response messages on the conversation screen, when there is no previous conversation message with the counterpart within the specified period, transferring a greeting request prompt to the AI model by generating the greeting request prompt, and obtaining, through the AI model, greeting messages corresponding to the greeting request prompt, and displaying the greeting messages on the conversation screen.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 201) comprising:
communication circuitry (190, 290);
a display (160, 260);
memory (130, 230) storing instructions; and
at least one processor (120, 220) operatively connected to the communication circuitry, the display and the memory,
wherein the instructions, when executed by the at least one processor individually or collectively, cause the electronic device to:
search for previous conversation message with a counterpart in a state in which a message recommendation function is activated while a conversation screen with the counterpart is displayed on the display,
when there is at least one previous conversation message with the counterpart within a specified period:
transfer a response request prompt to an AI model by generating the response request prompt using the at least one previous conversation message ,
obtain, through the AI model, response messages corresponding to the response request prompt, and
display the response messages on the conversation screen, and
when there is no previous conversation message with the counterpart within the specified period:
transfer a greeting request prompt to the AI model by generating the greeting request prompt, obtain, through the AI model, greeting messages corresponding to the greeting request prompt, and
display the greeting messages on the conversation screen.

2. The electronic device of claim 1,
wherein the instructions, when executed by the at least one processor individually or collectively, cause the electronic device to:
transmit, through the communication circuitry, a response message selected by a user input among the response messages to the counterpart, or
transmit, through the communication circuitry, a greeting message selected by the user among the greeting messages to the counterpart.

3. The electronic device of claim 1 or 2,
wherein the instructions, when executed by the at least one processor individually or collectively, cause the electronic device to:
identify whether to use an AI model of the electronic device or a cloud AI model of an external electronic device as the AI model,
when using the AI model of the electronic device, obtain, through the AI model of the electronic device, the response messages corresponding to the response request prompt, and
when using the cloud AI model, transmit, through the communication circuitry, the response request prompt to the external electronic device and receive response messages obtained using the cloud AI model from the external electronic device.

4. The electronic device of any one of claims 1 to 3,
wherein the response request prompt includes a command, a response format, and an input, to be input to the AI model, and
wherein the input includes the at least one previous conversation message and author information of each of the at least one previous conversation message.

5. The electronic device of any one of claims 1 to 4,
wherein the instructions, when executed by the at least one processor individually or collectively, cause the electronic device to:
block displaying of the response messages when the at least one previous conversation message and/or the response messages include a specified inappropriate expression.

6. The electronic device of any one of claims 1 to 5,
wherein the instructions, when executed by the at least one processor individually or collectively, cause the electronic device to:
identify the format of each of the response messages,
when the format of each of the response messages is not a specified format, change the format of each of the response messages to the specified format.

7. The electronic device of any one of claims 1 to 6,
wherein the instructions, when executed by the at least one processor individually or collectively, cause the electronic device to:
identify whether a response message in a first language different from a second language of the at least one previous conversation message exists among the response messages, and
display remaining response messages in the second language, except for the response message in the first language, among the response messages.

8. The electronic device of any one of claims 1 to 7,
wherein the instructions, when executed by the at least one processor individually or collectively, cause the electronic device to:
identify similarities between the response messages,
based on the similarities, when there are a plurality of similar response messages among the response messages, identify one of the plurality of similar response messages, and
remove remaining similar response messages except for one of the plurality of similar response messages.

9. The electronic device of any one of claims 1 to 8,
wherein the instructions, when executed by the at least one processor individually or collectively, cause the electronic device to:
when the number of the greeting messages is less than a specified number, obtain at least one additional greeting message using greeting data sets prestored in the memory, and
display the greeting messages and the at least one additional greeting message on the conversation screen.

10. The electronic device of any one of claims 1 to 9,
wherein the instructions, when executed by the at least one processor individually or collectively, cause the electronic device to:
select a greeting data set according to time, date, and/or language among the greeting data sets, and
obtain at least one additional greeting message using the selected greeting data set.

11. A method of recommending a conversation message using an AI model by an electronic device (101, 201), the method comprising:
searching for a previous conversation message with a counterpart in a state in which a message recommendation function is activated while a conversation screen with the counterpart is displayed on a display (160, 260) of the electronic device; and
in case that there is at least one previous conversation message with the counterpart within a specified period, transferring a response request prompt to an AI model by generating the response request prompt using the at least one previous conversation message, obtaining, through the AI model, response messages corresponding to the response request prompt, and displaying the response messages on the conversation screen; or
in case that there is no previous conversation message with the counterpart within the specified period, transferring a greeting request prompt to the AI model by generating the greeting request prompt, obtaining, through the AI model, greeting messages corresponding to the greeting request prompt, and displaying the greeting messages on the conversation screen.

12. The method of claim 11, further comprising:
transmitting, through the communication circuitry, a response message selected by a user input among the response messages to the counterpart, or
transmitting, through the communication circuitry, a greeting message selected by a user among the greeting messages to the counterpart.

13. The method of claim 11 or 12, further comprising:
identifying whether to use an AI model of the electronic device or a cloud AI model of an external electronic device as the AI model;
in case of using the AI model of the electronic device, obtaining, through the AI model of the electronic device, the response messages corresponding to the response request prompt, and
in case of using the cloud AI model, transmitting, through the communication circuitry, the response request prompt to the external electronic device and receiving response messages obtained using the cloud AI model from the external electronic device.

14. The method of claim 11 or 13, wherein the response request prompt includes a command, a response format, and an input, to be input to the AI model, and
wherein the input includes the at least one previous conversation message and author information of each of the at least one previous conversation message.

15. A non-transitory storage medium storing instructions configured to, when executed by an electronic device (101, 201), cause the electronic device to perform at least one operation,
wherein the at least one operation comprises:
searching for a previous conversation message with a counterpart in a state in which a message recommendation function is activated while a conversation screen with the counterpart is displayed on a display (160, 260) of the electronic device;
in case that there is at least one previous conversation message with the counterpart within a specified period, transferring a response request prompt to an AI model by generating the response request prompt using the at least one previous conversation message;
obtaining, through the AI model, response messages corresponding to the response request prompt, and displaying the response messages on the conversation screen;
in case that there is no previous conversation message with the counterpart within the specified period, transferring a greeting request prompt to the AI model by generating the greeting request prompt; and
obtaining, through the AI model, greeting messages corresponding to the greeting request prompt, and displaying the greeting messages on the conversation screen.
